# EUROPÄISCHE PATENTSCHRIFT

(11) **EP 1 703 244 B1**
(45) Veröffentlichungstag und Bekanntmachung des Hinweises auf die Patenterteilung: **20.07.2011**
(21) Anmeldenummer: 06003754.6
(22) Anmeldetag: 23.02.2006
(51) Int. Cl.: F28F 3/08, F28F 21/02, F28D 21/00, F28F 7/02

(54) **Blockwärmetauscher für staubhaltige Rauchgase**
Block type heat exchanger for dust-laden flue gas
Bloc échangeur de chaleur pour gaz effluents contenant de la poussière

(30) Priorität: 25.02.2005 DE 102005009202
(43) Veröffentlichungstag der Anmeldung: 20.09.2006
(73) Patentinhaber: SGL Carbon SE, 65203 Wiesbaden (DE)
(72) Erfinder: Franz, Marcus, Dr., 86830 Schwabmünchen (DE); Kalterherberg, Gerhard, 86672 Thierhaupten (DE); Künzel, Jürgen, Dr., 86672 Thierhaupten (DE); Pöllmann, Peter, Dr., 86368 Gersthofen (DE); Götz, Sören, Dr.-Ing., 86641 Rain (DE)

(56) Entgegenhaltungen:
- EP-A- 0 864 816
- DE-A1- 3 734 292
- DE-A1- 19 837 269
- DE-U1- 29 604 521
- FR-A- 2 678 047
- US-A- 4 284 609
- US-A- 4 562 053
- US-A- 6 070 655
- US-B1- 6 273 940

## Beschreibung

Die Erfindung betrifft Verfahren zum Betrieb von Blockwärmetauschem für in Brennwerttechnik arbeitende Verbrennungsanlagen mit staubhaltigen Rauchgasen, und für den Betrieb mit staubhaltigen Rauchgasen geeignete Blockwärmetauscher.

Die Brennwerttechnik zeichnet sich dadurch aus, dass die abziehenden Rauchgase einer Verbrennungsanlage in einem Wärmetauscher bis unter den Taupunkt abgekühlt werden, so dass eine zumindest teilweise Kondensation des in ihnen enthaltenen Wasserdampfs erzwungen wird, und die dabei entzogene Wärme zur Nutzung auf ein Niedertemperatur-Wärmeträgermedium übertragen wird, z.B. den Rücklauf eines Heizkreislaufs oder auf das Speisewasser einer Warmwasserquelle. Üblicherweise werden für die Kondensation Wärmetauscher aus Edelstahl verwendet.
Das Kondensat enthält neben Wasser ggf. weitere wasserlösliche Rauchgasbestandteile, z.B. Oxide des Schwefels (SO₂, SO₃), die in Wasser korrosiv wirkende Säuren bilden. Die Zusammensetzung des Kondensats und seine korrosive Wirkung hängen sehr stark vom eingesetzten Brennstoff ab. Während die Verbrennung entschwefelten Erdgases relativ unproblematisch ist, entstehen bei der Verbrennung von Heizöl oder Biomasse im Rauchgas hohe Konzentrationen an SO₂ und SO₃. Bei Heizöl mit einem Schwefelgehalt von 1.000 ppm kommt es in metallischen Wärmetauschern laut Herstellerangaben bereits zu erheblichen Korrrosionsproblemen.
Ein weiteres Problem ist die relativ hohe Chlorbelastung von Biomassebrennstoffen wie z.B. Stroh, Getreide, Hackschnitzel, Holzpellets oder Brennholz. Auch dies führt zur Korrosion von metallischen Brennwertkesseln. Daher wird bei diesen Brennstoffen häufig auf die Absenkung der Rauchgastemperatur unter den Taupunkt und die Nutzung der Kondensationswärme verzichtet.
Um auch in mit Biomasse oder stark schwefelhaltigen Brennstoffen betriebenen Anlagen die Vorteile der Brennwerttechnik ausnutzen zu können, sind korrosionsbeständige Wärmetauscher erforderlich. Aus dem Gebrauchsmuster DE 296 04 521 U1 ist ein aus Platten aus Graphit zusammengesetzter Wärmetauscherblock bekannt. Innerhalb des Blocks sind Kanalsysteme für zwei Medien auf verschiedenen Ebenen angeordnet. Die Kanäle für das Wärme abgebende gasförmige Medium werden durch in die Flachseiten der Platten eingelassene Nuten gebildet, zwischen denen Rippen stehen bleiben. Die Kanäle für das zweite, zu erwärmende Medium (im folgenden als Wärmeträgermedium bezeichnet) werden durch die Platten durchdringende Bohrungen gebildet. Die Stärke der Platten wird so gewählt, dass die beiden auf verschiedenen Ebenen liegenden Kanalsysteme durch eine dünne, den Wärmeübergang wenig behindernde Materialbarriere getrennt sind, deren Stärke aber ausreichend ist, um beide Kanalsysteme fluiddicht voneinander zu trennen. Die Kanäle der beiden Gruppen können parallel oder senkrecht zueinander angeordnet sein, je nachdem, ob eine Medienführung im Gegen- bzw. Gleichstrom oder im Kreuzstrom beabsichtigt ist.
Ein Wärmetauscherblock umfasst mindestens zwei übereinander liegenden Platten, von deren aneinandergrenzenden Flachseiten mindestens eine mit Kanäle bildenden Nuten versehen ist. Da mehrere derartige Paare von Platten neben- und übereinander gelegt werden können, ergibt sich eine Vielzahl von Kombinatioasmöglichkeiten, Diese modulare Bauweise erlaubt eine gezielte Anpassung des Wärmetauschers für verschiedene Anforderungen. Die Platten werden durch Klebemittel oder mittels Dichtungen und Zug- oder Spannankern fluiddicht zusammengefügt.
In diesen Wärmetauschern werden die Kanäle für das gasförmige Medium bevorzugt so gestaltet, dass ein hohes Verhältnis von Wärmeübergangsfläche zu Kanalvolumen erreicht wird. Dabei ist jedoch zu beachten, dass der freie Strömungsquerschnitt noch groß genug sein muss, um das Abströmen der Gase durch den Kaminsog zu gewährleisten. Eine geeignete Lösung sind Kanäle in Form von Nuten mit einem hohen Verhältnis von Tiefe zu Breite.
Die Wirksamkeit dieser Maßnahmen zur Verbesserung des Wärmeübergangs und der Strömungsverhältnisse wird jedoch beeinträchtigt, wenn sich an den Wandflächen der Ranchgaskanäle Feststoffablagerungen bilden. Dieses Problem besteht insbesondere bei mit Biomasse, z.B. Holzhackschnitzeln oder -pellets, betriebenen Verbrennungsanlagen, da deren Abgase sehr staub- und aschehaltig sind. Die Verschmutzung der Wärmeübergangsfläche führt zu einer Vergrößerung des Wärmedurchgangswiderstands und folglich zu einer Verringerung des übertragbaren Wärmestroms. Zugleich bewirkt die Staubablagerung zwangsläufig einen signifikanten Druckverlust, da sich der freie Querschnitt der Rauchgaskanäle verringert.

In einer Veröffentlichung der Zeitschrift "Sonne, Wind und Wärme" aus dem Jahr 2002 (Heft 03/2002 S.50-59) wurde aufgrund der mit dem hohen Ascheanteil verbundenen Schwierigkeiten prognostiziert, dass für die Nutzung der Brennwerttechnik für Holzkesselheizungen noch eine Entwicklungszeit von 10 Jahren nötig ist. In einer in derselben Zeitschrift veröffentlichten Marktübersicht wurden die technischen Parameter und Bedieneigenschaften verschiedener auf dem Markt erhältlicher Holzheizungen verglichen und die Notwendigkeit der regelmäßigen Reinigung des Rauchgas-Wärmetauschers von Flugasche hervorgehoben. Bei einem Drittel der getesteten Geräte muss dies 15 bis 29mal pro Heizperiode per Hand geschehen, während andere Hersteller eine automatische Reinigungsvorrichtung des Wärmetauschers anbieten, die jedoch den Preis der Heizung erhöht.

Mit dem Problem der Staubfracht im Rauchgas beschäftigt sich auch die Veröffentlichung "Erprobung der Brennwerttechnik in häuslichen Holzhackschnitzelfeuerungen mit Sekundärwärmetauscher" (Hrsg. vom Technologie- und Förderzentrum im Kompetenzzentrum für Nachwachsende Rohstoffe Straubing 2004, S.21-23). Die Versuchsanlage enthielt einen mit Holzhackschnitzeln gefeuerten Kessel und einen Rohrbündelwärmetauscher mit mehreren waagerecht neben- und übereinander angeordneten Bündeln von Rohren aus einer Spezialkeramik hoher Wärmeleitfähigkeit. Rauchgasführung und Kondensatablauf befanden sich innerhalb des Rohrbündelwärmetauschers im Gleichstrom.

Es wurde untersucht, ob durch Eindüsung von Frischwasser (Quenehen) in den Rauchgasstrom unmittelbar vor dem Eintritt in den Wärmetauscher die Staubfracht des Abgases und die Staubablagerung auf den Wärmetauscherrohren vermindert werden kann. Beide Ziele konnten jedoch nicht erreicht werden, die Staubemission war im Quenchbetrieb sogar höher. Die Anordnung der Wärmetauscherrohre übereinander sollte eigentlich verhindern, dass sich Staub auf den Wärmetauscherrohren ablagert und die Räume zwischen den Rohren verstopft. Es zeigte sich aber, dass sich dies bei den in hohem Maße mit Staub beladenen Rauchgasen der Verbrennung von Holzhackschnitzeln auch durch den Quenchbetrieb nicht vermeiden ließ.

Zwar ist die Staubablagerung in Rohrbündelwärmetauschern weniger problematisch als in den aus DE 296 04 521 U1 bekannten Blockwärmetauschern, denn in diesen fallen die gefrästen Kanäle bei Blockade auf ihrer gesamten Länge für den Rauchgastransport und damit für den Wärmeübergang aus, so dass die Wärmeübergangsfläche drastisch abnimmt. Andererseits ist die kompakte Bauart der aus Platten aufgebauten Blockwärmetauscher nach DE 296 04 521 U1 ein großer Vorteil gegenüber Rohrbündelwärmetauschem.

Mit der vorliegenden Erfindung wird ein Verfahren zum Betrieb eines Blockwärmetauschers für eine in Brennwerttechnik arbeitende Verbrennungsanlage mit staubhaltigen Rauchgasen, bereitgestellt, das eine zuverlässige Freihaltung der für den Wärmeübergang und die Kondensatbildung benötigten Wandflächen der Rauchgaskanäle gewährleistet. Diese Aufgabe wird gelöst durch die Verfahren nach Anspruch 14 bis 21.

Durch das erfindungsgemäße Verfahren wird gleichzeitig die flächenbezogene Kondensationsleistung gesteigert und sichergestellt, dass der obere Heizwert der Brennstoffe weitestmöglich ausgeschöpft wird. Aufgrund der erfindungsgemäß verbesserten Ausnutzung des oberen Heizwerts verringert sich der Brennstoffbedarf.

Die vorliegende Erfindung betrifft ferner für das erfindungsgemäße Verfahren geeignete Blockwärmetauschcr entsprechend Anspruch 1 bis 13.

Weitere Details und Vorzüge der Erfindung können der folgenden detaillierten Beschreibung und den Figuren entnommen werden.

Die Figuren zeigen;
- Figur 1: eine Variante des erfindungsgemäßen Verfahrens mit Gegenstrom von Rauch- gas und Kondensat
- Figur 2: eine Variante des erfindungsgemäßen Verfahrens mit Gegenstrom von Rauch- gas und Kondensat und Eindüsung von Wasser am Rauchgasaustritt
- Figur 3: eine Variante des erfindungsgemäßen Verfahrens mit einem dem Wärmetauscherblock nachgeschalteten Tröpfchenabscheider
- Figur 4: eine Variante des erfindungsgemäßen Verfahrens mit Rauchgas und Kondensat im Gleichstrom
- Figur 5: eine Ausführungsform eines Wärmetauscherblocks mit zum Rauchgaseintritt hin abgeschrägten Rippen zwischen den Rauchgaskanälen
- Figur 6: eine Ausführungsform eines Wärmetauscherblocks mit Spalten zwischen den Rippen der aneinanderstoßenden Platten
- Figur 7: eine Ausführungsform eines Wärmetauscherblocks mit die Rauchgaskanäle verbindenden Querkanälen
- Figur 8: eine Ausführungsform eines Wärmetauscherblocks mit turbulenzfördernden Einbauten in den Rauchgaskanälen

Das Grundprinzip der erfindungsgemäßen Verfahren zum Betrieb des Blockwärmetauschers für staubhaltige Rauchgase besteht darin, dass der Staub bei Berührung der Wandflächen der Rauchgaskanäle sofort weggespült wird, um so die Bildung von Staubablagerungen zu verhindern.

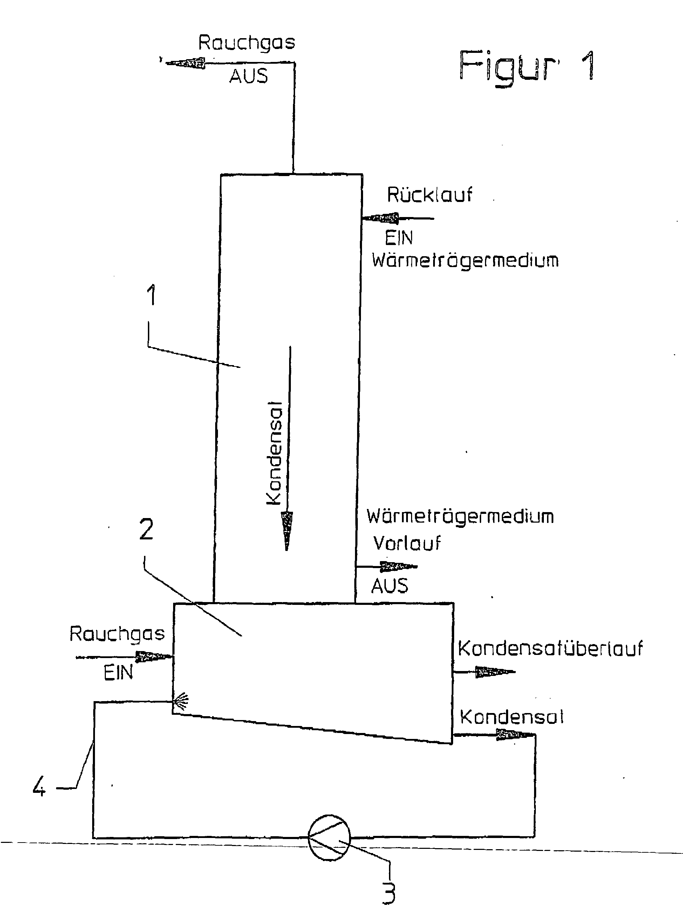

Dies ist am einfachsten zu erreichen, indem die Rauchgase im Wärmetauscherblock 1 im Gegenstrom zum Kondensatablauf geführt werden, d.h. das Rauchgas durchströmt den Wärmetauscherblock von unten nach oben und kühlt auf diesem Weg ab. Dabei kondensiert der Wasserdampf und benetzt die Wandflächen der Rauchgaskanäle, d.h. die Wärmeübergangsflächen, Je weiter der Rauchgasstrom nach oben steigt, desto stärker kühlt er sich ab und desto mehr Kondensat wird gebildet. Da am Rauchgasaustritt des Wärmetauscherblocks das Rauchgas am weitesten abgekühlt ist, wird eine dauernde Befeuchtung der Rauchgaskanäle mit Kondensat gewährleistet. Das nach unten ablaufende Kondensat spült den Staub von den Wandflächen der Kanäle ab.
Zusätzlich kann durch dosierte Einsprühung von Kondensat aus dem Neutralisations- und Sammelbehälter 2 in das heiße Rauchgas am oder unmittelbar vor dem Eintritt in den Wärmetauscherblock 1 dessen Wasserdampfgehalt erhöht werden, so dass im Wärmetauscherblock 1 mehr Kondensat gebildet und die Reinigungswirkung gesteigert wird (Figur 1). Bei dieser Verfahrensweise ist es besonders vorteilhaft, einen Wärmetauscherblock 1 aus Graphit zu verwenden, da wegen der Korrosionsfestigkeit des Graphits eine Neutralisation des Kondensats nicht zwingend erforderlich ist. Um Verstopfungen der Sprühdüsen zu vermeiden, sollte das Kondensat aber geklärt werden, dafür sind entsprechende Vorrichtungen vorzusehen. Nur das am Kondensatüberlauf austretende, nicht mehr für die Befeuchtung der Rauchgase genutzte Kondensat muss neutralisiert und gereinigt werden.

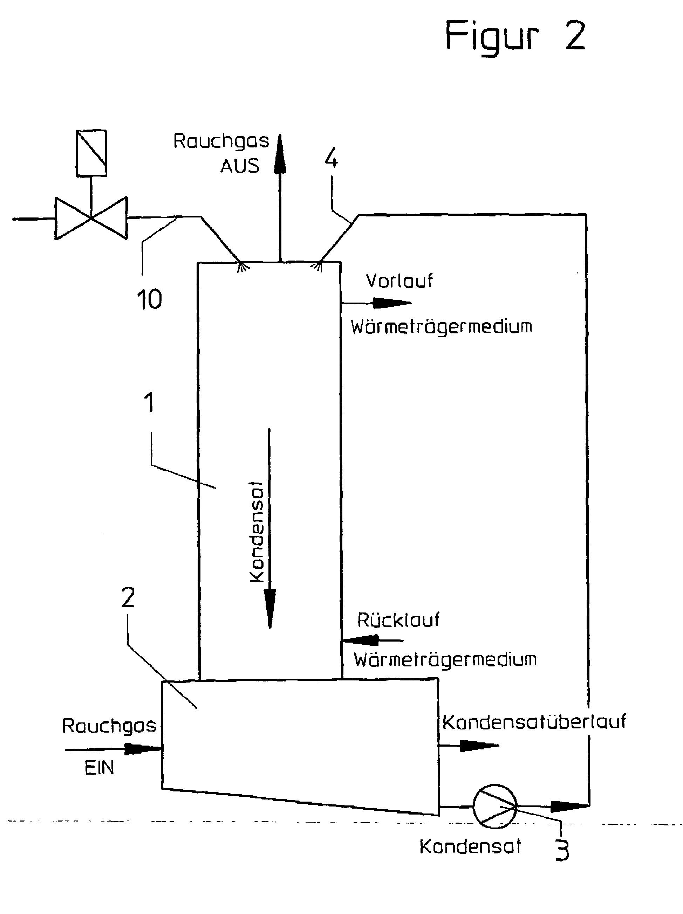

Die Entstaubungswirkung durch das dem Rauchgasstrom entgegen fließende Kondensat lässt sich noch steigern, indem in der Nähe des Rauchgasaustritts kontinuierlich oder in Intervallen Kondensat oder Frischwasser in den Wärmetauscherblock 1 eingesprüht wird (Figur 2). Das Kondensat wird mittels einer Pumpe 3 von einem Sammelgefäß 2 durch eine Verbindungsleitung zur Düse 4 in der Nähe des Rauchgasaustritts gefördert und hier in den Rauchgasstrom eingesprüht. Anstelle von Kondensat oder zusätzlich kann in der Nähe des Rauchgasaustritts auch Frischwasser, das über eine Zufuhrleitung mit einer Waschdüse 10 zugeführt wird, eingesprüht werden. Vor allem bei der Befeuchtung mit Frischwasser bietet sich eine nur in Intervallen betriebene Düse oder Wasserverteilung 10 an.

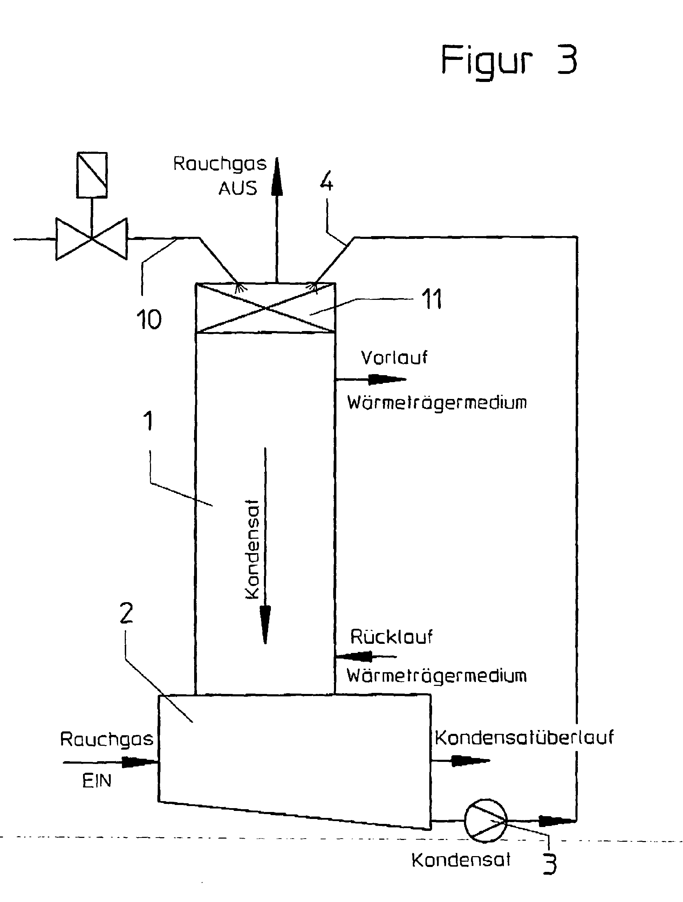

Bei der Betriebsweise im Gegenstrom ist der Wärmetauscherblock so auszulegen, dass die Strömungsgeschwindigkeit der Rauchgase nicht so groß wird, dass das Kondensat aus den Rauchgaskanälen herausgeblasen wird.
In einer weiteren Variante (Figur 3) wird dem Wärmetauscherblock 1 ein Tropfenabscheider 11, z.B. aus Dralatgestrick, nachgeschaltet. Dadurch wird es möglich, aus dem abgekühlten Rauchgasstrom noch feinste Staubteilchen zu entfernen, die als Kondensationskeime in den abzuscheidenden Tröpfchen enthalten sind und mit diesen Tröpfchen abgeschieden werden. Beispielsweise kann ein Tropfenabscheider 11, der auf eine Tropfengröße von 10 µm ausgelegt ist, Staubteilchen abscheiden, die noch kleiner sind als 10 µm. So wird die Entstaubungswirkung nochmals verstärkt.
Der Tropfenabscheider 11 wird zweckmäßig so angeordnet, dass er durch die Waschdüse 10 oder/und durch die mit der Kondensatrückführung verbundene Düse 4 von oben diskontinuierlich oder kontinuierlich gewaschen werden kann.
Zwar wird in Figur 3 eine Variante mit Waschdüse 10 und Tropfenabscheider 11 gezeigt, jedoch ist die zusätzliche Frischwasserzufuhr über die Waschdüse 10 für den Betrieb mit Tropfenabscheider 11 nicht zwingend erforderlich, da das Waschen des Tropfenabscheiders 11 auch mittels über die Leitung zur Düse 4 rückgeführten Kondensats erfolgen kann,
Die Kondensatableitung kann bei Gegenstromfahrweise von Kondensat und Rauchgas auch teilweise über einen zusätzlichen Kondensatablauf zwischen dem Wärmetauscherblock 1 und dem Tropfenabscheider 11 erfolgen. Durch passende Wahl der Strömungsgeschwindigkeit des Rauchgases kann so eine Zweiphasenschicht ausgebildet werden, ähnlich der eines Kolonnenbodens, speziell eines Siebbodens oder eines Tunnelbodens, wie er aus der thermischen Verfahrenstechnik bekannt ist. Durch diese Zweiphasen- oder Sprudelschicht wird nochmals eine Verbesserung der Entstaubungsleistung erreicht. Mit teilweiser Kondensatableitung ist gemeint, dass nicht das gesamte Kondensat an dieser Stelle abgezogen wird, sondern ein Teil des Kondensats im Wärmetauscherblock verbleibt, um die Befeuchtung der Wandflächen und damit die Verhinderung von Staubablagerungen sicherzustellen.

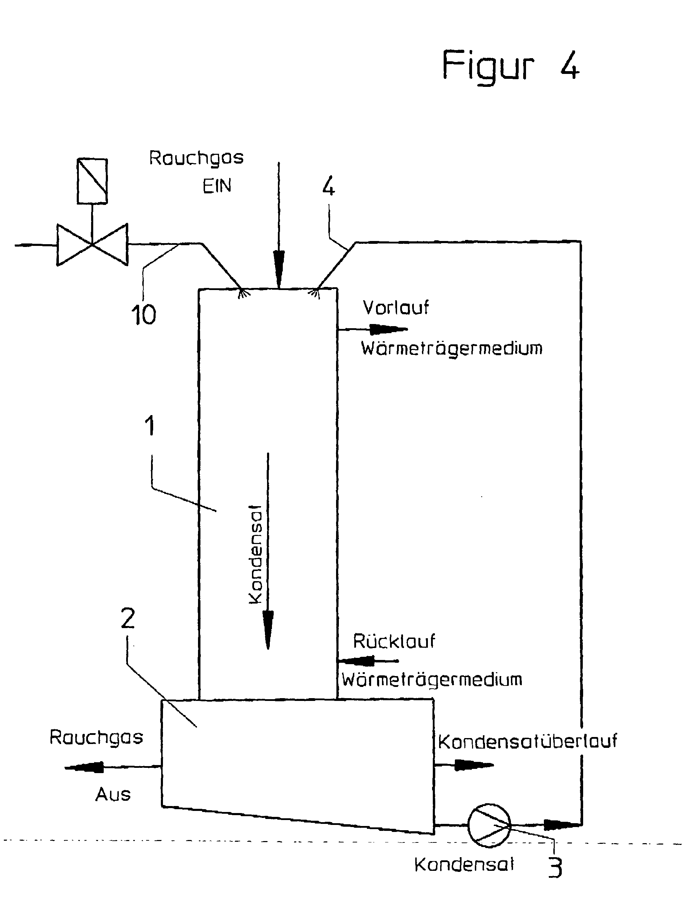

In Wärmetauschem, in denen Rauchgas und Kondensat im Gleichstrom in Richtung der Schwerkraft fließen (Figur 4), lässt sich eine Vermeidung von Staubablagerungen ebenfalls dadurch erreichen, dass in das heiße Rauchgas am oder unmittelbar vor dem Eintritt in den Wärmetauscherblock 1 Kondensat eingedüst wird. Bevorzugt wird soviel Kondensat eingedüst, dass der Taupunkt erreicht wird, d.h. der Rauchgasstrom mit Wasserdampf gesättigt ist. Das entstehende Kondensat entfaltet dann sofort nach Kontaktierung des Rauchgases mit den als Kühlflächen wirkenden Wandflächen der Rauchgaskanäle seine Reinigungswirkung.
Zudem führt die erfindungsgemäße Befeuchtung des Rauchgases bei im Gleichstrom betriebenen Wärmetauschern zu einer Verbesserung des Wirkungsgrads, da wegen der Wasserdampfsättigung die Kondensation bereits am Rauchgaseintritt stattfindet. Durch die Kondensation steigt der Wärmeübergangskoeffizient α beträchtlich an (von 5 bis 120 W/m²*K bei reiner Gaskühlung auf 4.000 bis 12.000 W/m²*K bei Filmkondensation, bei Tröpfchenkondensation sogar auf 35.000 bis 45.000 W/m²*K).
Ohne Rauchgasbefeuchtung dagegen setzt die Kondensation erst im Mittelteil des Wärmetauschers ein, so dass nur in diesem Teil des Wärmetauschers die den Wärmeübergang begünstigenden Bedingungen vorliegen. Dadurch kann insgesamt nur eine geringere flächenbezogene Wärmemenge übertragen werden.

Das Kondensat wird mittels einer Pumpe 3 von einem Sammelgefäß 2 durch eine Verbindungsleitung zur Düse 4 gefördert und hier in die Rauchgasleitung oder den Rauchgaseintrittsbereich des Wärmetauscherblocks 1 eingesprüht.
Vorteilhaft wird ein Wärmetauscherblock 1 aus Graphit verwendet, da wegen der Korrosionsfestigkeit des Graphits eine Neutralisation des Kondensats nicht zwingend erforderlich ist. Um Verstopfungen der Sprühdüsen zu vermeiden, sollte das Kondensat aber geklärt werden, dafür sind entsprechende Vorrichtungen vorzusehen. Nur das am Kondensatüberlauf austretende, nicht mehr für die Befeuchtung der Rauchgase genutzte Kondensat muss neutralisiert und gereinigt werden.
Anstelle von Kondensat oder zusätzlich kann auch Frischwasser, das über eine Zufuhrleitung mit einer Waschdüse 10 zugeführt wird, eingesprüht werden. Vor allem bei der Befeuchtung mit Frischwasser bietet sich eine nur in Intervallen betriebene Düse oder Wasserverteilung an. Dem Wärmetauscherblock kann ein Tropfenabscheider nachgeschaltet werden.

Prinzipiell ist das erfindungsgemäße Verfahren nicht an Wärmetauscherblöcke aus Graphit gebunden. Diese sind jedoch bevorzugt wegen ihrer Korrosionsbeständigkeit. Außerdem können sich bei Verwendung von Wärmetauschern aus Graphit im Kondensat keine Schwermetallionen bilden.
Das Kernstück dieses Wärmetauschers umfasst einen aus Graphitplatten zusammengesetzten Block 1, der auf mehreren Ebenen von Kanälen durchzogen wird. Die Rauchgaskanäle durchziehen den Block in Längsrichtung und die Kanäle für das Wärmeträgermedium (Kühlkanäle) in Querrichtung, so dass diese beiden Medien im Kreuzstrom zueinander geführt werden. Alternativ können die Kanäle wie auch aus DE 296 04 521 U1 bekannt parallel angeordnet sein, so dass Rauchgase und Wärmeträgermedium im Gleich- oder Gegenstrom geführt werden können
Mindestens eine Flachseite jeder Platte ist mit mehreren parallelen Nuten versehen, die durch Rippen voneinander getrennt sind. Die Platten werden so übereinander gestapelt, dass jeweils die mit Nuten versehenen Flachseiten aneinander stoßen, wobei die Nuten in den beiden Plattenoberflächen einander ergänzen und auf diese Weise die Kanäle bilden, die durch die aneinander stoßenden Rippen der beiden Platten begrenzt werden. Ist nur eine Flachseite je Platte mit Nuten versehen, so wird die keine Nuten aufweisende Flachseite üblicherweise mit der keine Nuten aufweisenden Flachseiten der nächsten Platte kombiniert, so dass immer abwechselnd Nuten aufweisende Flachseiten und von Nuten freie Flachseiten der Platten einander benachbart sind. Die nach außen gewandten Flachseiten der ersten und der letzten Platte eines Stapels sind nicht mit Nuten versehen.

Um einen Kanalquerschnitt zu erhalten, der gleichzeitig strömungstechnisch günstig ist und eine große Wärmeübergangsfläche bietet, werden Nuten mit einer gegenüber ihrer Weite sehr großen Tiefe bevorzugt. Das Verhältnis von Nutweite zu Tiefe kann bis zu ca. 1:50 betragen, wobei aus produktions- und verfahrenstechnischen Überlegungen für Graphitapparate ein Verhältnis von ca. 1:1 bis 1:10 besonders günstig ist. Die Plattenstärke wird so ausgelegt, dass zwischen den Böden der Nuten und den Bohrungen eine für die Gewährung mechanischer Stabilität und Fluiddichtheit ausreichende Materialschicht stehen bleibt.

Der Rauchgasstrom verteilt sich auf die an der Schmalseite des Blocks mündenden Längskanäle und durchströmt diese, Das zu erwärmende Wärmeträgermedium, z.B. Wasser, durchfließt nacheinander einzelne Gruppen von sich quer zu den Rauchgaskanälen erstreckenden Kühlkanälen, wobei zuerst Kühlkanäle am dem Rauchgaseintritt entgegengesetzten Ende des Blocks durchströmt werden und zuletzt Kühlkanäle in der Nähe des Rauchgaseintritts (Kreuzgegenstrom). Die Mündungen der Kühlkanäle sind durch Hauben (Deckel) aus Stahl abgeschlossen. Die Haube über den Eingangsöffnungen der zuerst zu durchströmenden Gruppe von Kühlkänalen ist mit einem Einlaufstutzen für das Wärmeträgermedium verbunden und bildet so eine Einlass- und Verteilkammer, die Haube über den Ausgangsöffnungen der zuletzt durchströmten Gruppe von Kühlkanälen ist mit dem Auslaufstutzen für das erwärmte Wärmeträgermedium verbunden und bildet so eine Sammel- und Auslasskammer. Die Mündungen der dazwischen liegenden Kühlkanäle sind durch Hauben abgedeckt, welche Umlenkkammern bilden. Jede dieser Hauben erstreckt sich über die Mündungen einer zuerst durchströmten Gruppe von Kühlkanälen und einer danach zu strömenden Gruppe von Kühlkanälen. Dadurch werden die nacheinander zu durchströmenden Kühlkanäle miteinander verbunden und die Fließrichtung des Wärmeträgermediums umgelenkt.

Weitere Informationen und Details zu geeigneten Graphitwerkstoffen, der Herstellung und Verbindung der Platten, dem Verlauf der Kanäle und der Führung der Medien können aus DE 296 04 521 Ul entnommen werden.

Der Aufbau des Wärmetauscherblocks aus einzelnen Platten ermöglicht die Anpassung der Baugröße an den Anwendungszweck, so dass Wärmetauscherblöcke mit einer für den gewünschten Einsatz passenden Leistung bereitgestellt werden können.
Diese Anpassung kann einerseits dadurch erfolgen, dass kleinere Einheiten übereinander oder/und nebeneinander angeordnet werden und so zu größeren Anlagen kombiniert werden. Aus produktionstechnischen Gründen ist es jedoch vorteilhafter, zunächst große Platten mit mehreren einzelnen Sätzen von Kanälen vorzufertigen, und diese dann zu Baueinheiten der gewünschten Größe zu zerteilen. Die einzelnen Sätze von Kanälen auf den Platten sind so ausgelegt, dass jeder Satz die für die kleinste Baugröße nötige Anzahl von Kanälen aufweist.
Falls erforderlich, wird hinter dem Wärmetauscher ein Ventilator vorgesehen, um durch Aufbau eines Druckgradienten (Sog) die Strömung der Rauchgase zu beschleunigen.

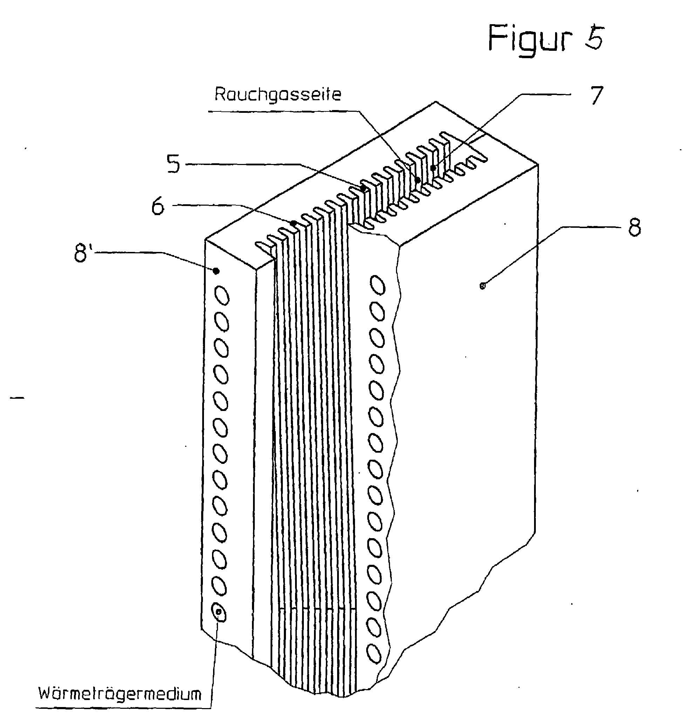

In einer besonderen Ausführungsform (Figur 5) des Wärmetauscherblocks 1 für das erfindungsgemäße Verfahren sind in der Nähe des Eingangsbereichs der Rauchgase die Rippen 5 auf den Platten 8, 8' zwischen den die Rauchgaskanäle 6 bildenden Nuten zum Rauchgaseintritt hin abgeschrägt. Das heißt, unmittelbar am Rauchgaseingang münden die einzelnen nebeneinander liegenden Kanäle in eine sich über alle Rauchgaskanäle erstreckende schlitzförmige Rauchgaseintrittsöffnung 7.
Diese Ausführungsform zeichnet sich durch mehrere Vorteile aus. Im Gegensatz zu der Bauart ohne abgeschrägte Rippen, wo die Stirnflächen der Rippen unmittelbar dem heißen Rauchgasstrom ausgesetzt sind, trifft der heiße Rauchgasstrom am Eingang des Wärmetauschers mit abgeschrägten Rippen nicht unmittelbar auf die Rippen auf, so dass deren Überhitzung vermieden wird.
Durch das allmähliche Ansteigen der abgefrästen Rippen 5 vermindert sich der vom Rauchgas durchströmte Querschnitt kontinuierlich, bis die Rippen ihre volle Höhe erreicht haben und nur noch die Querschnitte der einzelnen Rauchgaskanäle zur Verfügung stehen. Diese Verringerung des durchströmten Querschnitts kann den mit der Abkühlung verbundenen Volumenverlust der Rauchgase kompensieren, so dass über die gesamte Länge des Wärmetauschers eine gleichmäßige Strömungsgeschwindigkeit der Rauchgase erhalten wird.
Ein Eingangsbereich mit aufgeweiteten Rauchgaskanälen hat zudem den Vorteil der leichteren Reinigung mit Wasser oder Kondensat, da er wie ein Trichter wirkt.

Als besonders günstig für die Reinigung des Wärmetauschers hat sich die Beschichtung der Wandflächen der Rauchgaskanäle mit einem die Anhaftung von Staub verhindernden Fluorpolymer, beispielsweise PFA oder PTFE erwiesen. Auch Beschichtungen aus anderen staubabweisenden Materialien oder Lackierungen sind geeignet, z.B. Beschichtungen mit einem Nanopartikel enthaltenden Lack oder einem Pulver aus Nanopartikeln, die den bekannten Lotuseffekt bewirken. Der Vorteil besteht darin, dass die Stäube erstens weniger leicht auf der Oberfläche haften bleiben und zweitens die Reinigung durch Wasser oder Kondensat vereinfacht wird, da an der hydrophobisierten Oberfläche das Wasser leicht abläuft. Für diesen Zweck ist ein dünner Überzug mit einer Dicke von 30 bis maximal 500 µm, der den Wärmeübergang nicht behindert, ausreichend. Es ist auch nicht erforderlich, dass der Überzug dicht ist. Außerdem ist eine hydrophobe, d.h. wenig benetzbare Oberfläche Voraussetzung dafür, dass die Kondensation bevorzugt als Tropfenkondensation abläuft. Die Tropfenkondensation ist, wie bereits erwähnt, gegenüber der Filmkondensation vorteilhaft wegen des höheren Wärmeübergangskoeffizienten.
Die Beschichtung der Wandflächen der Rauchgaskanäle ist auch für herkömmliche Wärmetauscherblöcke aus metallischen Werkstoffen geeignet. Hier könnten durch eine dichte, flächendeckende Beschichtung gleichzeitig ein Korrosionsschutz für die mit Rauchgas in Kontakt stehenden Oberflächen bewirkt werden.

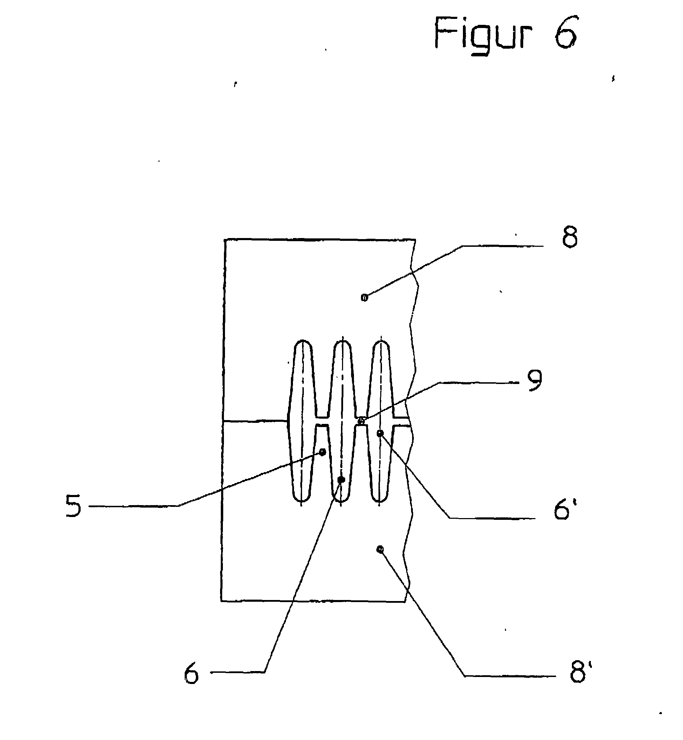

Eine weitere Verbesserung (Figur 6) des Wärmetauscherblocks 1 für das erfindungsgemäße Verfahren besteht darin, dass zwischen den Rippen 5 der einander gegenüberliegenden Platten 8, 8' ein Spalt 9 vorgesehen wird. Der Abstand zwischen den Rippen 5 beider Platten, d.h. die Breite des Spalts 9, beträgt vorzugsweise eine halbe bis ganze Nutbreite. Mindestens jedoch ist die Spaltbreite gleich der Schichtdicke der oben erwähnten haftvermindernden Beschichtung. Durch diese Spalte 9 zwischen den Rippen 5 der beiden Platten 8, 8' werden die nebeneinander liegenden Rauchgaskanäle 6, 6' miteinander verbunden. So kann bei zeitweiliger oder dauerhafter Verstopfung einzelner Kanäle das Rauchgas in freie Kanäle umgeleitet werden, während nach Passage der Verstopfung weiter stromabwärts der Rauchgasstrom auch wieder durch die vorher blockierten Kanäle 6 fließt.

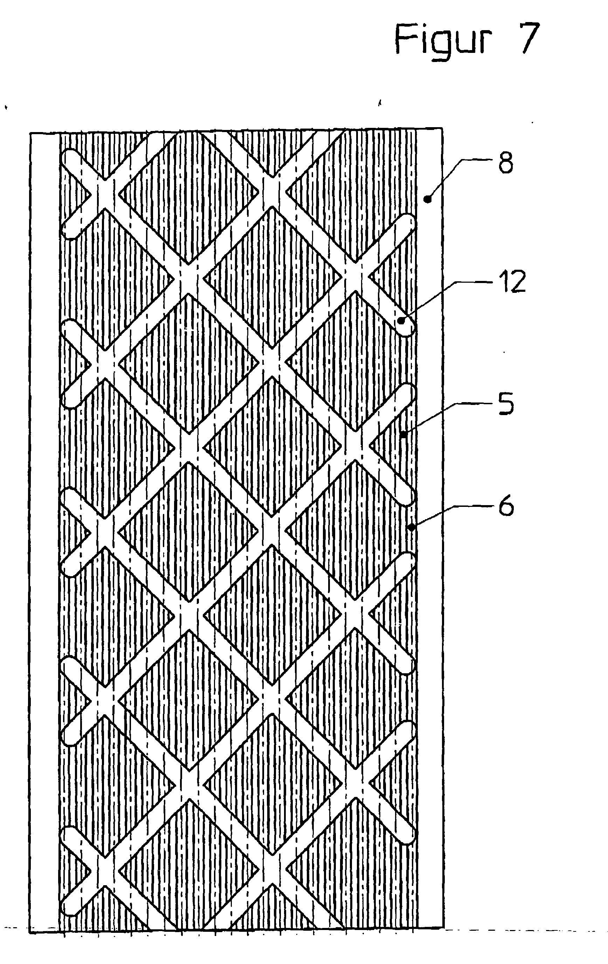

Der Spalt 9 kann auf unterschiedliche Weise gebildet werden. Beispielsweise können die einander gegenüberliegenden Platten 8, 8' durch einen Rahmen oder eine Dichtung oder die aufgetragene haftvermindernde Beschichtung so auf Abstand gehalten werden, dass zwischen den einander gegenüberliegenden Rippen 5 ein Spalt entsteht.
Alternativ kann die Höhe der Rippen 5 durch Abfräsen auf ein Niveau unterhalb des Randbereichs der Platten vermindert werden, so dass die Rippen beim Übereinanderstapeln der Platten 8, 8' nicht mehr aufeinander stoßen.
Es müssen nicht zwischen allen Rippen 5 Spalten 9 vorgesehen sein. In einer Variante sind einzelne Rippen so ausgeführt, dass sie mit der jeweils gegenüberliegenden Rippe zusammenstoßen. Beide diesen Rippen jeweils benachbarte Rippen weisen jedoch Spalte auf, so dass jeder Gaskanal zumindest mit einem seiner benachbarten Rauchgaskanäle in Verbindung steht. So werden einzelne Gruppen miteinander verbundener Rauchgaskanäle gebildet.
Verbindungen zwischen den nebeneinander verlaufenden Rauchgaskanälen 6, 6' welche bei Verstopfung einzelner Rauchgaskanäle 6, 6' einen Bypass für den Rauchgasstrom bereitstellen, können auch durch in die Rippen 5 eingefräste Querkanäle 12 hergestellt werden. Auf den den Wärmetauscherblock bildenden Platten 8 werden dafür die Rippen 5 in regelmäßigen oder unregelmäßigen Abständen durch Querkanäle 12 unterbrochen.
Die Entsaubungswirkung kann noch weiter verbessert werden, indem die Querkanäle 12 quer zu den Rippen 5 in einem bestimmten Winkel gefräst werden (Figur 7), Dabei ist ein Winkel von 30° bis 75° in Strömungsrichtung besonders vorteilhaft. Es zeigt sich, dass durch diese Maßnahme die laminare Unterschicht der Rauchgasströmung gestört wird, so dass Staubpartikel und Kondensattröpfchen an die gekühlten Begrenzungsflächen prallen und mit dem herabfließenden Kondensat ausgetragen werden.

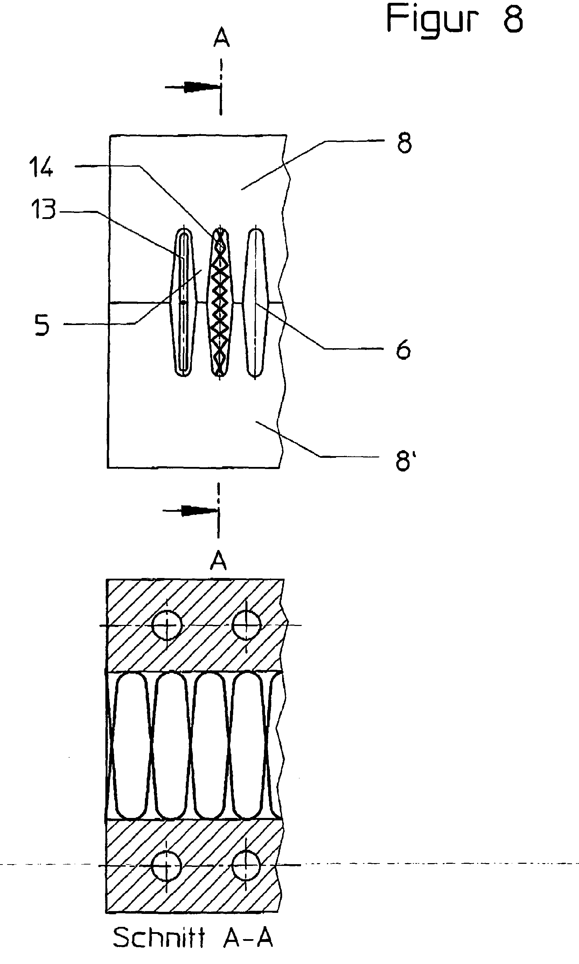

Ein ähnlicher Effekt wird erzielt, indem in den Rauchgaskanälen 6 turbulenzfördernde Strömungswiderstände vorgesehen werden (Figur 8). Hierfür können beispielsweise quer angeströmte Stäbchenstrukturen 13 angewandt werden. Die strömungsmechanische und wärmetechnische Berechnung eines derartig modifizierten Blockwärmetauschers ergibt um ca. 50% höhere Wärmeübertragungsraten. Da Wärme- und Stoffübertragung analogen Gesetzmäßigkeiten folgen, wird auch die Kondensation entsprechend gesteigert. Die Erhöhung der Geschwindigkeit des-- Rauchgasstroms um die turbulenzfördernden Einbauten in den Rauchgaskanälen 6 führt zu einer verstärkten Abscheidung von Staubpartikeln aufgrund von deren Trägheit (Trägheitsabscheidung).

Derartige Verbesserungen lassen sich auch durch andere turbulenzfördernde Einbauten in den Rauchgaskanälen 6 erreichen, insbesondere durch in den Rauchgaskanälen 6 vorgesehene Drahtgeschlinge (Drahtmatrix) 14 oder durch an die Rippenoberflächen aufgebrachte Strömungswiderstände.

Dank des korrosionsbeständigen Graphitwerkstoffs und des erfindungsgemäßen Betriebsverfahrens, welches die Bildung von Staubablagerungen verhindert, ist der Blockwärmetauscher nahezu wartungsfrei. Ein weiterer Vorteil ist, dass seine kompakte Bauweise auch den nachträglichen Einbau in bestehende Heizungsanlagen erlaubt. Solche Nachrüstungen sind nicht nur vorteilhaft wegen des durch das erfindungsgemäße Verfahren verringerten Brennstoffbedarfs, sondern in vielen Fällen auch zwingend erforderlich aufgrund des Inkrafttretens strengerer Regeln für den Betrieb von Heizungsanlagen, z.B. durch die zum 1.11.2004 in Kraft getretene Bundesimmissionsschutzverordnung und die zum 31.12.2006 im Kraft tretende Energiesparverordnung.

## Patentansprüche

1. Blockwärmetauscher für eine in Brennwerttechnik arbeitende Verbrennungsanlage mit staubhaltigen Rauchgasen, umfassend
• einen Wärmetauscherblock (1), der aus Graphit besteht und aus einzelnen Platten aufgebaut ist, wobei mindestens eine Flachseite jeder Platte mit mehreren parallelen Nuten versehen ist, die durch Rippen (5) voneinander getrennt sind, wobei die Platten so übereinander gestapelt sind, dass jeweils die mit Nuten versehenen Flachseiten aneinander stoßen und die Nuten in den beiden Plattenoberflächen einander ergänzen und auf diese Weise die Rauchgaskanäle (6, 6') bilden, die durch die aneinander stoßenden Rippen (5) der beiden Platten begrenzt und in der Nähe des Rauchgaseingangs des Wärmetauscherblocks (1) die Rippen (5) zwischen den die Rauchgaskanäle (6) bildenden Nuten zum Rauchgaseingang hin abgeschrägt sind, so dass am Rauchgaseingang die einzelnen nebeneinander liegenden Kanäle (6) in eine sich über alle Rauchgaskanäle (6) erstreckende Rauchgaseintrittsöffnung (7) münden
• einen Neutralisations- und Sammelbehälter (2) für das Kondensat mit Überlauf
• eine Düse (4) am Rauchgaseintritt des Wärmetauscherblocks (1) oder an der Rauchgasleitung unmittelbar vor dem Eintritt in den Wärmetauscherblock (1)
• eine Leitung, die den Neutralisations- und Sammelbehälter (2) mit der Düse (4) verbindet
• eine Pumpe (3) zur Förderung des Kondensats vom Sammel- und Neutralisationsbehälter (2) über die Leitung zur Düse (4).

2. Blockwärmetauscher für eine in Brennwerttechnik arbeitende Verbrennungsanlage mit staubhaltigen Rauchgasen, umfassend
• einen Wärmetauscherblock (1), in welchem Rauchgas und Kondensat im Gegenstrom geführt werden, wobei der Wärmetauscherblock (1) aus Graphit besteht und aus einzelnen Platten aufgebaut ist, wobei mindestens eine Flachseite jeder Platte mit mehreren parallelen Nuten versehen ist, die durch Rippen (5) voneinander getrennt sind, wobei die Platten so übereinander gestapelt sind, dass jeweils die mit Nuten versehenen Flachseiten aneinander stoßen und die Nuten in den beiden Plattenoberflächert einender ergänzen und auf diese Weise die Rauchgaskanäle (6, 6') bilden, die durch die aneinander stoßenden Rippen (5) der beiden Platten begrenzt und in der Nähe des Rauchgaseingangs des Wärmetauscherblocks (1) die Rippen (5) zwischen den die Rauchgaskanäle (6) bildenden Nuten zum Rauchgaseingang hin abgeschrägt sind, so dass am Rauchgaseingang die einzelnen nebeneinander liegenden Kanäle (6) in eine sich über alle Rauchgaskanäle (6) erstreckende Rauchgaseintrittsöffnung (7) münden
• einen Neutralisations- und Sammelbehälter (2) für das Kondensat mit Überlauf
• eine Düse (4) am Rauchgasaustritt des Wärmetauscherblocks (1)
• eine Leitung, die den Neutralisations- und Sammelbehälter (2) mit der Düse • (4) verbindet
• eine Pumpe (3) zur Förderung des Kondensats vom Sammel- und Neutralisationsbehälter (2) über die Leitung zur Düse (4).

3. Blockwärmetauscher nach einem der Ansprüche 1 oder 2, **dadurch gekennzeichnet, dass** dem Wärmetauscherblock (1) ein Tropfenabscheider (11) nachgeschaltet ist.

4. Blockwärmetauscher nach Anspruch 3, **dadurch gekennzeichnet, dass** die Düse (4) zum Einsprühen von Kondensat oder/und eine Düse (10) zum Einsprühen von Frischwasser am Tropfenabscheider (11) angeordnet ist, so dass der Tropfenabscheider (11) von oben durch das eingedüste Kondensat oder/und Frischwasser gewaschen werden kann.

5. Blockwärmetauscher nach Anspruch 1 oder 2, **gekennzeichnet durch** einen
• dem Wärmetauscher nachgeschalteten Tropfenabscheider (11) und
• einen Kondensatablauf zwischen Wärmetauscherblock (1) und Tropfenabscheider (11), über den ein Teil des Kondensats abgezogen wird.

6. Blockwärmetauscher nach einem der Ansprüche 1 bis 5, **dadurch gekennzeichnet, dass**
am Rauchgaseintritt des Wärmetauscherblocks (1) oder an der Rauchgasleitung unmittelbar vor dem Eintritt in den Wärmetauscherblock (1) bzw. am Rauchgasaustritt des Wärmetauscherblocks (1) Düsen (10) zum Einsprühen von Frischwasser vorgesehen sind.

7. Blockwärmetauscher nach einem der Ansprüche 1 bis 6, **dadurch gekennzeichnet, dass**
im Wärmetauscherblock (1) die Wandflächen der Rauchgaskanäle mit einer die Haftung von Staubpartikeln vermindernden Beschichtung von einer Dicke von 30 bis 500 µm aus einem Fluoropolymer oder aus einem anderen staubabweisenden Material oder mit einer staubabweisenden Lackierung versehen sind.

8. Blockwärmetauscher nach einem der Ansprüche 1 bis 7, **dadurch gekennzeichnet, dass**
im Wärmetauscherblock (1) zwischen allen oder einigen Rippen (5) der einander gegenüberliegenden Platten (8, 8') sich jeweils ein Spalt (9) befindet, durch den die nebeneinander liegenden Rauchgaskanäle (6, 6') miteinander verbunden sind.

9. Blockwärmetauscher nach einem der Ansprüche 1 bis 8, **dadurch gekennzeichnet, dass**
im Wärmetauscherblock (1) nebeneinander liegende Rauchgaskanäle (6, 6') durch in die Rippen (5) eingefräste Querkanäle (12) miteinander verbunden sind.

10. Blochwärmetauscher nach Anspruch 9, **dadurch gekennzeichnet, dass** die Querkanäle (12) quer zu den Rippen (5) in einem Winkel von 30 bis 75° gefräst sind.

11. Blockwärmetauscher nach einem der Ansprüche 1 bis 10, **dadurch gekennzeichnet, dass** in den Rauchgaskanälen turbulenzfordernde Einbauten vorgesehen sind.

12. Blockwärmetauscher nach Anspruch 11, **dadurch gekennzeichnet, dass** die turbulenzfördernden Einbauten quer angeströmte Stäbchen (13) sind.

13. Blockwärmetauscher nach Anspruch 11, **dadurch gekennzeichnet, dass** zur Turbulenzförderung in den Rauchgaskanälen (6, 6') Drahtgeschlinge (14) vorgesehen sind.

14. Verfahren zum Betrieb eines Blockwärmetauschers für eine in Brennwerttechnik arbeitende Verbrennungsanlage mit staubhaltigen Rauchgasen nach einem oder mehreren der Ansprüche 1 bis 13,
**dadurch gekennzeichnet, dass**
im Wärmetauscherblock (1) Rauchgas und Kondensat im Gegenstrom fließen.

15. Verfahren nach Anspruch 14,
**dadurch gekennzeichnet, dass**
in das heiße Rauchgas am oder unmittelbar vor dem Eintritt in den Wärmetauscherblock (1) kontinuierlich oder in Intervallen Kondensat aus einem Neutralisations- und Sammelbehälter (2) oder/und Frischwasser eingedüst werden.

16. Verfahren nach Anspruch 14, **dadurch gekennzeichnet, dass**
in der Nähe des Rauchgasaustritts kontinuierlich oder in Intervallen Kondensat aus einem Neutralisations- und Sammelbehälter (2) oder/und Frischwasser in den Wärmetauscherblock (1) eingedüst wird.

17. Verfahren zum Betrieb eines Blockwärmetauschers für eine in Brennwerttechnik arbeitende Verbrennungsanlage mit staubhaltigen Rauchgasen nach einem oder mehreren der Ansprüche 1 bis 13,
**dadurch gekennzeichnet, dass**
Rauchgas und Kondensat zueinander im Gleichstrom fließen und in das heiße Rauchgas am oder unmittelbar vor dem Eintritt in den Wärmetauscherblock (1) soviel Kondensat aus einem Neutralisations- und Sammelbehälter (2) oder/und Frischwasser eingedüst wird, dass der Rauchgasstrom mit Wasserdampf gesättigt ist.

18. Verfahren nach Anspruch 14 oder 17, **dadurch gekennzeichnet, dass**
die aus dem Wärmetauscherblock (1) austretenden Rauchgase durch einen Tropfenabscheider (11) geführt werden.

19. Verfahren nach Anspruch 18, **dadurch gekennzeichnet, dass**
der Tropfenabscheider (11) durch Kondensat aus dem Neutralisations- und Sammelbehälter (2) oder/und Frischwasser gewaschen wird.

20. Verfahren nach einem der Ansprüche 14 bis 16, **dadurch gekennzeichnet, dass**
die aus dem Wärmetauscherblock (1) austretenden Rauchgase durch einen Tropfenabscheider (11) geführt werden und ein Teil des Kondensats über einen Kondensatablauf zwischen dem Wärmetauscherblock (1) und dem Tropfenabscheider (11) abgezogen wird.

21. Verfahren nach einem der Ansprüche 15 bis 20, **dadurch gekennzeichnet, dass** für die Befeuchtung der Rauchgase geklärtes Kondensat ohne Neutralisation eingesetzt wird.

## Claims

1. Block heat exchanger for a combustion plant operating by the condensing value technique and having dust-containing flue gases, comprising
• a a heat exchanger block (1) which consists of graphite and is constructed from individual plates, at least one flat side of each plate being provided with a plurality of parallel grooves which are separated from one another by ribs (5), the plates being stacked one above the other such that in each case the flat sides provided with grooves butt one against the other and the grooves in the two plate surfaces supplement one another and thereby form the flue-gas ducts (6, 6') which are delimited by the mutually abutting ribs (5) of the two plates, and, in the vicinity of the flue-gas inlet of the heat exchanger block (1), the ribs (5) being bevelled towards the flue-gas inlet between the grooves forming the flue-gas ducts (6), so that, at the flue-gas inlet, the individual ducts (6) lying next to one another issue into a flue-gas inflow orifice (7) extending over all the flue-gas ducts (6),
• a neutralization and collection container (2) for the condensate with overflow,
• a nozzle (4) at the flue-gas inlet of the heat exchanger block (1) or on the flue-gas line directly upstream of the inlet into the heat exchanger block (1),
• a line which connects the neutralization and collection container (2) to the nozzle (4),
• a pump (3) for conveying the condensate from the collection and neutralization container (2) to the nozzle (4) via the line.

2. Block heat exchanger for a combustion plant operating by the condensing value technique and having dust-containing flue gases, comprising
• a heat exchanger block (1) in which flue gas and condensate are routed in countercurrent, the heat exchanger block (1) consisting of graphite and being constructed from individual plates, at least one flat side of each plate being provided with a plurality of parallel grooves which are separated from one another by ribs (5), the plate being stacked one above the other such that in each case the flat sides provided with grooves butt one against the other and the grooves in the two plate surfaces supplement one another and thereby form the flue-gas ducts (6, 6') which are delimited by the mutually abutting ribs (5) of the two plates, and, in the vicinity of the flue-gas inlet of the heat exchanger block (1), the ribs (5) being bevelled towards the flue-gas inlet between the grooves forming the flue-gas ducts (6), so that, at the flue-gas inlet, the individual ducts (6) lying next to one another issue into a flue-gas inflow orifice (7) extending over all the flue-gas ducts (6),
• a neutralization and collection container (2) for the condensate with overflow,
• a nozzle (4) at the flue-gas outlet of the heat exchanger block (1),
• a line which connects the neutralization and collection container (2) to the nozzle (4),
• a pump (3) for conveying the condensate from the collection and neutralization container (2) to the nozzle (4) via the line.

3. Block heat exchanger according to either one of Claims 1 and 2, **characterized in that** the heat exchanger block (1) is followed by a drop separator (11).

4. Block heat exchanger according to Claim 3, **characterized in that** the nozzle (4) for spraying in condensate and/or a nozzle (10) for spraying in fresh water are/is arranged on the drop separator (11), so that the drop separator (11) can be washed from above by the injected condensate and/or fresh water.

5. Block heat exchanger according to Claim 1 or 2, **characterized by** a
• drop separator (11) following the heat exchanger and
• a condensate run-off between the heat exchanger • block (1) and drop separator (11), via which run-off part of the condensate is discharged.

6. Block heat exchanger according to one of Claims 1 to 5, **characterized in that** nozzles (10) for spraying in fresh water are provided at the flue-gas inlet of the heat exchanger block (1) or on the flue-gas line directly upstream of the inlet into the heat exchanger block (1) or at the flue-gas outlet of the heat exchanger block (1).

7. Block heat exchanger according to one of Claims 1 to 6, **characterized in that**, in the heat exchanger block (1), the wall faces of the flue-gas ducts are provided with a coating which reduces the adhesion of dust particles and has a thickness of 30 to 500 µm and which consists of a fluoropolymer or of another dust-repelling material or is provided with a dust-repelling lacquering.

8. Block heat exchanger according to one of Claims 1 to 7, **characterized in that**, in the heat exchanger block (1), a gap (9) is located in each case between all or some ribs (5) of the plates (8, 8') lying opposite one another, through which gap the flue-gas ducts (6, 6') lying next to one another are connected to one another.

9. Block heat exchanger according to one of Claims 1 to 8, **characterized in that** flue-gas ducts (6, 6') lying next to one another in the heat exchanger block (1) are connected to one another by means of transverse ducts (12) milled into the ribs (5).

10. Block heat exchanger according to Claim 9, **characterized in that** the transverse ducts (12) are milled transversely to the ribs (5) at an angle of 30 to 75°.

11. Block heat exchanger according to one of Claims 1 to 10, **characterized in that** turbulence-promoting fittings are provided in the flue-gas ducts.

12. Block heat exchanger according to Claim 11, **characterized in that** the turbulence-promoting fittings are sticks (13) subjected to transverse flow.

13. Block heat exchanger according to Claim 11, **characterized in that**, for the promotion of turbulence, intertwined wires (14) are provided in the flue-gas ducts (6, 6').

14. Method for operating a block heat exchanger for a combustion plant operating by the condensing value technique and having dust-containing flue gases according to one or more of Claims 1 to 13, **characterized in that**, in the heat exchanger block (1), flue gas and condensate flow in countercurrent.

15. Method according to Claim 14, **characterized in that** condensate from a neutralization and collection container (2) and/or fresh water are/is injected continuously or at intervals into the hot flue gas at the or directly upstream of the inlet into the heat exchanger block (1).

16. Method according to Claim 14, **characterized in that** condensate from a neutralization and collection container (2) and/or fresh water are/is injected into the heat exchanger block (1) continuously or at intervals in the vicinity of the flue-gas outlet.

17. Method for operating a block heat exchanger for a combustion plant operating by the condensing value technique and having dust-containing flue gases according to one or more of Claims 1 to 13, **characterized in that** flue gas and condensate flow in countercurrent to one another, and so much condensate from a neutralization and collection container (2) and/or fresh water are/is injected into the hot flue gas at the or directly upstream of the inlet into the heat exchanger block (1) that the flue-gas stream is saturated with water vapour.

18. Method according to Claim 14 or 17, **characterized in that** the flue gases emerging from the heat exchanger block (1) are routed through a drop separator (11).

19. Method according to Claim 18, **characterized in that** the drop separator (11) is washed by condensate from the neutralization and collection container (2) and/or by fresh water.

20. Method according to one of Claims 14 to 16, **characterized in that** the flue gases emerging from the heat exchanger block (1) are routed through a drop separator (11), and part of the condensate is discharged via a condensate run-off between the heat exchanger block (1) and the drop separator (11).

21. Method according to one of Claims 15 to 20, **characterized in that** clarified condensate, without neutralization, is used for moistening the flue gases.

## Revendications

1. Bloc d'échangeur de chaleur pour installation d'incinération travaillant selon la technique de la condensation et produisant des gaz de fumée contenant des poussières, le bloc comprenant :
- un bloc (1) d'échangeur de chaleur constitué de graphite et formé de différentes plaques, au moins un côté plat de chaque plaque étant doté de plusieurs rainures parallèles séparées les unes des autres par des nervures (5), les plaques étant empilées les unes au-dessus des autres de telle sorte que les côtés plats dotés des rainures soient jointifs et que les rainures des deux surfaces de plaque se complètent mutuellement et forment ainsi des canaux (6, 6') de gaz de fumée délimités par les nervures (5) mutuellement jointives des deux plaques, les nervures (5) situées entre les rainures formant les canaux (6) de gaz de fumée étant inclinées par rapport à l'entrée des gaz de fumée à proximité de l'entrée des gaz de fumée du bloc (1) d'échangeur de chaleur de telle sorte qu'à l'entrée des gaz de fumée, les différents canaux (6) situés les uns à côté des autres débouchent dans une ouverture (7) d'entrée des gaz de fumée qui s'étend sur tous les canaux (6) à gaz de fumée,
- un récipient (2) de neutralisation et de collecte de condensats, doté d'un débordement,
- une tuyère (4) située à l'entrée des gaz de fumée du bloc (1) d'échangeur de chaleur ou sur le conduit de gaz de fumée directement avant l'entrée dans le bloc (1) d'échangeur de chaleur,
- un conduit qui relie le récipient (2) de neutralisation et de collecte à la tuyère (4) et
- une pompe (3) qui transporte les condensats du récipient (2) de collecte et de neutralisation vers la tuyère (4) par le conduit.

2. Bloc d'échangeur de chaleur pour installation d'incinération travaillant selon la technique de la condensation et produisant des gaz de fumée contenant des poussières, le bloc comprenant :
- un bloc (1) d'échangeur de chaleur dans lequel les gaz de fumée et les condensats sont transportés à contre-courant, le bloc (1) d'échangeur de chaleur étant constitué de graphite et formé de différentes plaques, au moins un côté plat de chaque plaque étant doté de plusieurs rainures parallèles séparées les unes des autres par des nervures (5), les plaques étant empilées les unes au-dessus des autres de telle sorte que les côtés plats dotés des rainures soient jointifs et que les rainures des deux surfaces de plaque se complètent mutuellement et forment ainsi des canaux (6, 6') de gaz de fumée délimités par les nervures (5) mutuellement jointives des deux plaques, les nervures (5) situées entre les rainures formant les canaux (6) de gaz de fumée étant inclinées par rapport à l'entrée des gaz de fumée à proximité de l'entrée des gaz de fumée du bloc (1) d'échangeur de chaleur de telle sorte qu'à l'entrée des gaz de fumée, les différents canaux (6) situés les uns à côté des autres débouchent dans une ouverture (7) d'entrée des gaz de fumée qui s'étend sur tous les canaux (6) à gaz de fumée,
- un récipient (2) de neutralisation et de collecte de condensats, doté d'un débordement,
- une tuyère (4) située à l'entrée des gaz de fumée du bloc (1) d'échangeur de chaleur,
- un conduit qui relie le récipient (2) de neutralisation et de collecte à la tuyère (4) et
- une pompe (3) qui transporte les condensats du récipient (2) de collecte et de neutralisation vers la tuyère (4) par le conduit.

3. Bloc d'échangeur de chaleur selon l'une des revendications 1 ou 2, **caractérisé en ce qu'**un séparateur de gouttes (11) est raccordé en aval du bloc (1) d'échangeur de chaleur.

4. Bloc d'échangeur de chaleur selon la revendication 3, **caractérisé en ce que** la tuyère (4) qui injecte les condensats et/ou une tuyère (10) qui injecte de l'eau fraîche sont disposées sur le séparateur de gouttes (11) de telle sorte que le séparateur de gouttes (11) puisse être lavé par le haut par les condensats et/ou l'eau fraîche qui y sont injectés.

5. Bloc d'échangeur de chaleur selon les revendications 1 ou 2, **caractérisé par** un séparateur de gouttes (11) disposé en aval de l'échangeur de chaleur et
par une évacuation de condensats disposée entre le bloc (1) d'échangeur de chaleur et le séparateur de gouttes (11) et par lequel une partie des condensats est extraite.

6. Bloc d'échangeur de chaleur selon l'une des revendications 1 à 5, **caractérisé en ce que** des tuyères (10) d'injection d'eau fraîche sont prévues à l'entrée des gaz de fumée dans le bloc (1) d'échangeur de chaleur, sur le conduit de gaz de fumée, directement avant l'entrée dans le bloc (1) d'échangeur de chaleur ou à la sortie des gaz de fumée du bloc (1) d'échangeur de chaleur.

7. Bloc d'échangeur de chaleur selon l'une des revendications 1 6, **caractérisé en ce que** la surface des parois des canaux de gaz de fumée du bloc (1) d'échangeur de chaleur sont dotées d'un revêtement qui diminue l'adhérence des particules de poussière et dont l'épaisseur est comprise entre 30 et 500 µm, en un polymère fluoré, un autre matériau repoussant les poussières ou un vernis repoussant les poussières.

8. Bloc d'échangeur de chaleur selon l'une des revendications 1 à 7, **caractérisé en ce qu'**un interstice (9) par lequel les canaux (6, 6') à gaz de fumée situés les uns à côté des autres sont reliés les uns aux autres est disposé dans le bloc (1) d'échangeur de chaleur entre toutes les nervures (5) ou certaines de ces nervures des plaques mutuellement opposées (8, 8').

9. Bloc d'échangeur de chaleur selon l'une des revendications 1 à 8, **caractérisé en ce que** des canaux (6, 6') gaz de fumée situés les uns à côté des autres dans le bloc (1) d'échangeur de chaleur sont reliés les uns aux autres par des canaux transversaux (12) ménagés dans les nervures (5),

10. Bloc d'échangeur de chaleur selon la revendication 9, **caractérisé en ce que** les canaux transversaux (12) sont ménagés transversalement aux nervures (5) sous un angle de 30 à 75°.

11. Bloc d'échangeur de chaleur selon l'une des revendications 1 à 10, **caractérisé en ce que** des garnitures qui favorisent les turbulences sont prévues dans les canaux de gaz de fumée.

12. Bloc d'échangeur de chaleur selon la revendication 11, **caractérisé en ce que** les garnitures favorisant les turbulences sont des barrettes (13) balayées transversalement.

13. Bloc d'échangeur de chaleur selon la revendication 11, **caractérisé en ce que** pour favoriser les turbulences dans les canaux (6, 6') à gaz de fumée, des boucles (14) de fil sont prévues.

14. Procédé de conduite d'un bloc d'échangeur de chaleur pour installation d'incinération travaillant selon la technique de la condensation et produisant des gaz de fumée contenant des poussières selon l'une ou plusieurs des revendications 1 à 13, **caractérisé en ce que** les gaz de fumée et les condensats s'écoulent à contre-courant dans le bloc (1) d'échangeur de chaleur.

15. Procédé selon la revendication 14, **caractérisé en ce que** des condensats provenant d'un récipient (2) de neutralisation et de collecte et/ou de l'eau fraîche sont injectés de manière continue ou intermittente dans les gaz de fumée chauds à l'entrée dans le bloc (1) d'échangeur de chaleur ou immédiatement en avant de celle-ci.

16. Procédé selon la revendication 14, **caractérisé en ce que** des condensats provenant d'un récipient (2) de neutralisation et de collecte et/ou de l'eau fraîche sont injectés dans le bloc (1) d'échangeur de chaleur de manière continue ou intermittente à proximité de la sortie des gaz de fumée.

17. Procédé de conduite d'un bloc d'échangeur de chaleur pour installation d'incinération travaillant selon la technique de la condensation et produisant des gaz de fumée contenant des poussières selon l'une ou plusieurs des revendications 1 à 13, **caractérisé en ce que** les gaz de fumée et les condensats s'écoulent à contre-courant les uns par rapport aux autres et **en ce qu'**une quantité suffisante de condensats provenant d'un récipient (2) de neutralisation et de collecte et/ou de l'eau fraîche pour que l'écoulement de gaz de fumée soit saturé en vapeur d'eau est injectée dans les gaz de fumée chauds à l'entrée dans le bloc (1) d'échangeur de chaleur ou immédiatement en avant de cette entrée.

18. Procédé selon les revendications 14 ou 17, **caractérisé en ce que** les gaz de fumée qui sortent du bloc (1) d'échangeur de chaleur sont amenés dans un séparateur de gouttes (11).

19. Procédé selon la revendication 18, **caractérisé en ce que** le séparateur de gouttes (11) est lavé par des condensats provenant du récipient (2) de neutralisation des collectes et/ou par de l'eau fraîche.

20. Procédé selon l'une des revendications 14 à 16, **caractérisé en ce que** les gaz de fumée qui sortent du bloc (1) d'échangeur de chaleur sont amenés dans un séparateur de gouttes (11) et **en ce qu'**une partie des condensats est extraite par une évacuation de condensats située entre le bloc (1) d'échangeur de chaleur et le séparateur de gouttes (11).

21. Procédé selon l'une des revendications 15 à 20, **caractérisé en ce que** pour humidifier les gaz de fumée, il utilise des condensats clarifiés sans neutralisation.
